# FASCICULE DE BREVET EUROPEEN

(11) **EP 0 680 843 B1**
(45) Date de publication et mention de la délivrance du brevet: **01.07.1998**
(21) Numéro de dépôt: 95400982.5
(22) Date de dépôt: 28.04.1995
(51) Int. Cl.: B60N 2/06, B60N 2/24, B64D 11/06

(54) **Siège à encombrement variable, notamment pour avions**
Sitz mit veränderlichem Raumbedarf, insbesondere für Flugzeuge
Variable dimension seat, especially for aircrafts

(30) Priorité: 02.05.1994 FR 9405328
(43) Date de publication de la demande: 08.11.1995
(73) Titulaire: SOCIETE INDUSTRIELLE ET COMMERCIALE DE MATERIEL AERONAUTIQUE (SICMA) SOCIETE ANONYME, F-36100 Issoudun (FR)
(72) Inventeur: Marechal, Robert, René Lucien, F-75116 Paris (FR)
(74) Mandataire: Derambure, Christian

(56) Documents cités:
- EP-A- 0 322 930
- EP-A- 0 331 241
- EP-A- 0 530 900
- US-A- 2 758 872
- US-A- 3 637 253
- US-A- 3 893 729

## Description

L'invention concerne un système d'entraînement longitudinal de sièges d'appareils de transport en commun, convertibles et à encombrement variable, ainsi qu'une structure de sièges d'appareil de transport en commun convertibles et à encombrement variable pourvue d'un tel système, conformément aux préambules des revendications indépendantes 1 et 7 (voir par exemple EP-A-0 530 900).

L'invention concerne en particulier un système d'entraînement de sièges d'appareils de transport en commun convertibles et à encombrement variable, suivant un axe d'encombrement longitudinal.

Ces sièges sont montés sur une structure à plusieurs sièges adjacents. Chacun des sièges est écarté du suivant par un espace inter-bâti et coulisse suivant l'axe d'encombrement sur la structure.

De tels sièges sont utilisés notamment par les compagnies aériennes pour pouvoir adapter la cabine passagers d'un même appareil en fonction du taux de remplissage dans les différentes classes de confort et de tarif.

Il existe par exemple, selon le document EP-A-331 241, des structures comprenant un certain nombre de sièges ayant une largeur de confort donnée dans laquelle on fait varier l'espace inter-bâti pour augmenter ou diminuer la largeur de confort de chaque siège.

Citons également le document US-A-3 637 253 qui décrit un siège d'automobile avec une section de base fixe et un dossier central fixe pourvu de deux sections télescopiques d'extrémité. Les sections d'extrémités sont montées à coulissement sur la section de dossier centrale et fixe.

Et le document US-A-2 758 872 qui décrit un siège d'automobile déplaçable latéralement pour débattre vers l'extérieur et l'intérieur, au travers d'une ouverture de porte du véhicule.

Le but de l'invention est de fournir un système d'entraînement des sièges d'appareils de transport en commun convertibles et à encombrement longitudinal variable du type décrit plus haut, assurant une sécurité optimale, nécessitant une maintenance minimale et de manipulation aisée.

A cet effet, l'invention telle que définie dans la première revendication indépendante propose un système d'entraînement de sièges d'appareils de transport en commun convertibles et à encombrement variable suivant un axe d'encombrement longitudinal, les sièges étant montés sur une structure à plusieurs sièges adjacents, chacun écarté du suivant par un espace inter-bâti et coulissant sur ladite structure suivant l'axe d'encombrement. Le système d'entraînement permet le passage d'au moins un siège d'une première position extrême dite à encombrement maximal où l'espace inter-bâti est maximal, à une deuxième position extrême dite à encombrement minimal où l'espace inter-bâti est minimal.

L'objet de l'invention est défini par les revendications.

Le système d'entraînement comprend une vis sans fin d'axe parallèle à l'axe d'encombrement, venant en coopération avec au moins un écrou solidaire du siège à entraîner, de sorte qu'une action en rotation dans un sens sur la vis sans fin entraîne le siège de l'une des deux positions extrêmes vers l'autre, et qu'une action en rotation dans l'autre sens sur la vis sans fin entraîne le siège dans un mouvement inverse.

Le palier support de rotation de la vis sans fin peut être solidaire de l'un des autres sièges et/ou de la structure.

Une même vis sans fin peut entraîner une pluralité de sièges.

La valeur du déplacement peut être identique pour tous les sièges, c'est-à-dire que la vis sans fin comprend un filetage unique pour l'ensemble des sièges entraînés.

Dans une autre forme de réalisation, le filetage est adapté à chacun des sièges en faisant varier la valeur ou le sens du pas de la vis sans fin.

Le ou les filetages est/sont autobloquants. Cela veut dire qu'une action sur l'un des sièges entraînés dans la direction de l'axe d'encombrement n'induit aucun deplacement du siège. L'unique moyen de déplacer les sièges entraînés est d'agir sur la vis sans fin.

La vis sans fin peut être indifféremment activée manuellement ou par un moteur électrique ou équivalent.

L'invention concerne aussi une structure de sièges d'appareil de transport en commun convertibles et à encombrement variable telle que définie dans la seconde revendication indépendante du type comportant une partie fixe sur laquelle les sièges sont montés adjacents et coulissent suivant un axe d'encombrement entre deux positions, et des moyens d'actionnement, pour faire passer les sièges d'une position à l'autre. Selon l'invention les moyens d'actionnement sont un système d'entraînement tel que decrit ci-dessus.

D'autres avantages et caractéristiques de l'invention résulteront de la description qui va suivre en référence aux dessins annexés dans lesquels :

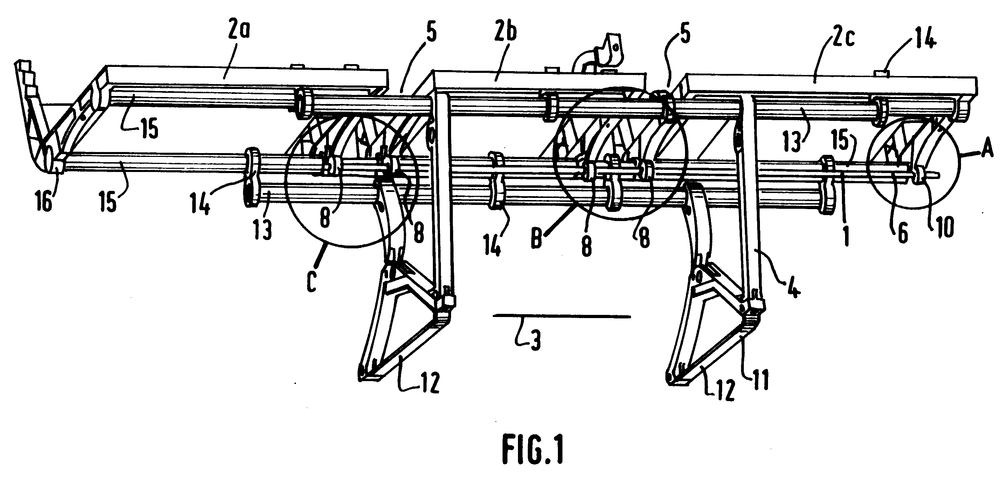

La figure 1 est une représentation schématique extérieure d'une structure ayant un système d'entraînement selon l'invention.

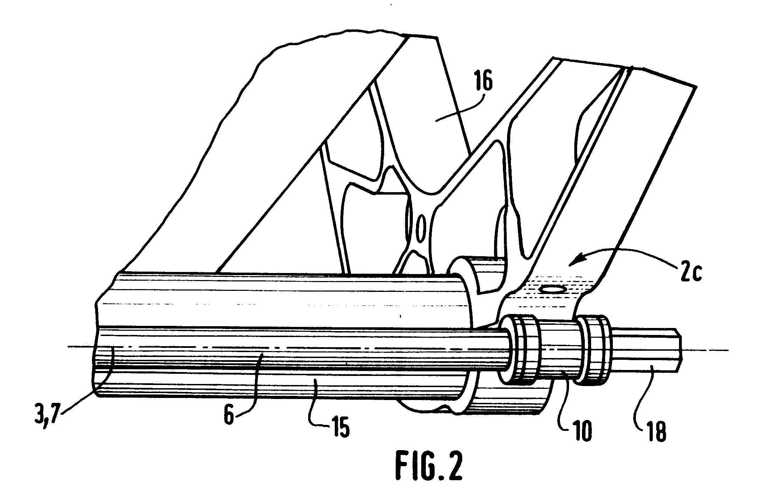

La figure 2 est une représentation schématique extérieure du détail référencé A/ représenté sur la représentation de la figure 1.
La figure 3 est une représentation schématique extérieure du détail référencé B/ sur la représentation de la figure 1.
La figure 4 est une représentation schématique extérieure du détail référencé C/ sur la représentation de la figure 1.

L'invention concerne un système d'entraînement 1 de sièges 2a,2b,2c d'appareils de transport en commun convertibles et à encombrement variable suivant un axe d'encombrement 3. Les sièges 2a,2b,2c sont montés sur une structure 4 à plusieurs sièges 2a,2b,2c adjacents. Chacun des sièges 2a,2b,2c est écarté du suivant par un espace inter-bâti 5 et coulisse suivant l'axe d'encombrement 3 sur la structure 4.

La structure représentée sur les dessins concerne une structure à trois sièges adjacents 2a,2b,2c à encombrement variable. Cette structure 4 comporte une partie fixe 11 sur laquelle les sièges 2a,2b,2c peuvent coulisser. Dans la forme de réalisation présentée sur les figures, la partie fixe comprend au moins deux piètements transversaux 12, espacés l'un de l'autre, destinés à être fixés au plancher de la cabine passagers de l'appareil de transport en commun. Ces deux piètements transversaux 12 sont reliés rigidement l'un à l'autre par des éléments longitudinaux de piètements 13 d'axe général parallèle à l'axe d'encombrement 3.

Chaque élément longitudinal de piètements 13 comprend des éléments de coulisseaux 14 solidaires des éléments longitudinaux 13 de piètements, d'axes parallèles et distincts de l'axe général de l'élément de piétement longitudinal 13 qui leur sont associés.

Dans ces éléments de coulisseaux 14 coulissent et sont guidés en translation suivant l'axe d'encombrement 3, des éléments de support longitudinaux 15 constitutifs de chacun des sièges 2a,2b,2c.

Une telle structure reposant sur un coulissement par coulisseau désaxé par rapport aux éléments longitudinaux de piétement permet de limiter sensiblement les zones de coulissement. Cela a pour effet de limiter l'encrassement des zones de coulissement, d'accéder plus facilement à ces zones de coulissement, de limiter les effets de blocage dus à la déformation des moyens de coulissement.

Un autre avantage d'une telle structure repose sur le fait que la liaison coulisseau-élément longitudinal de piétement peut comprendre un dispositif d'absorption de chocs venant en complément ou en substitution de ceux existant déjà classiquement sur les piètements transversaux.

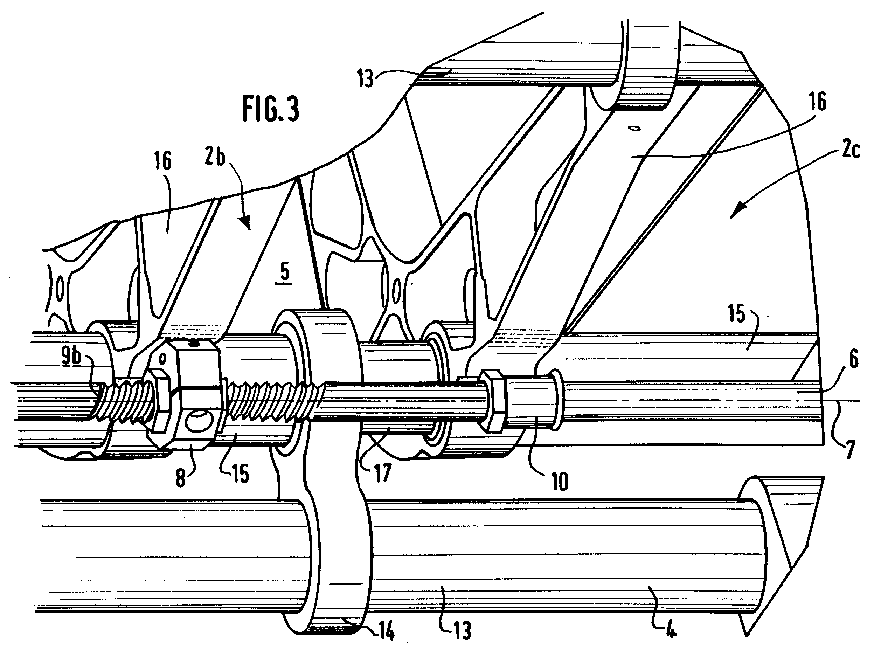

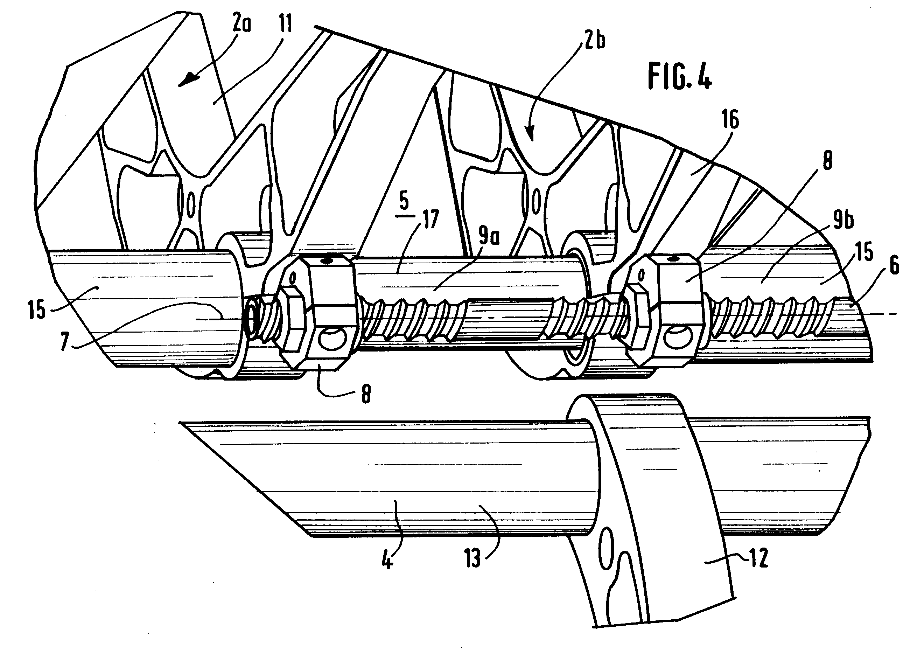

Comme cela est représenté sur les figures 3 et 4, les éléments de support longitudinaux 15 d'un siège peuvent être coulissants de façon co-axiale avec les éléments longitudinaux 15 du siège juste adjacent.

Cela s'effectue grâce à un manchon d'extrémité 17 d'un des éléments de support longitudinal 15 ayant un diamètre inférieur à l'élément de support longitudinal creux 15 du siège adjacent dans lequel il coulisse.

Chaque assise des sièges 2a,2b,2c est limitée de part et d'autre par des crosses transversales d'extrémité d'assise 16.

Ces crosses transversales d'extrémité d'assise 16 sont associés rigidement aux éléments de support longitudinaux 15 du siège qu'ils définissent.

Le système d'entraînement 1 selon l'invention comprend une vis sans fin 6 d'axe 7 parallèle à l'axe d'encombrement 3 venant en coopération avec au moins un écrou 8 solidaire du siège 2a,2b,2c à entraîner.

La vis sans fin peut indifféremment être associée rigidement par au moins un palier support de rotation 10, soit à un siège 2c, soit à la structure rigide 4. Ce palier support de rotation 10 laisse la vis sans fin libre en rotation autour de son axe 7 et est associé en translation à l'élément (crosse transversale d'extrémité) auquel il est rapporté.

La vis sans fin 6 peut entraîner une pluralité de sièges 2a,2b,2c.

La vis sans fin 6 peut comprendre un filetage unique pour l'ensemble des sièges entraînés. De ce fait, l'ensemble des sièges entraînés subit un déplacement équivalent.

Dans une autre variante de réalisation, la vis sans fin 6 peut comprendre une pluralité de filetages différents 9a,9b, chacun associé à un ou plusieurs sièges entraînés. De ce fait, l'on peut obtenir tous les mouvements des sièges entraînés les uns par rapport aux autres. Par exemple, en n'ayant que des filetages dans le même sens mais ayant des pas différents, on obtient le déplacement des sièges dans le même sens, chaque filetage induisant une amplitude différente du mouvement de translation suivant l'axe d'encombrement. Dans un autre exemple, certains filetages peuvent être inversés par rapport aux autres, de manière que, en tournant la vis sans fin 6 dans le même sens, on obtienne des mouvements de sièges inverses selon que l'on ait un filetage dans un sens ou dans l'autre.

Les filetages 9a,9b,9c présentent un angle par rapport à l'axe de la vis sans fin 6 tel qu'ils sont autobloquants. Cela veut dire que le filetage présente une pente telle qu'une action dans le sens de l'axe d'encombrement sur l'un des sièges 2a,2b,2c n'induit aucun mouvement. Seule une action sur la vis sans fin 6 permet de faire bouger les fauteuils les uns par rapport aux autres.

Cette vis sans fin 6 peut être indifféremment activée manuellement ou par un moteur électrique ou équivalent.

Dans le mode de réalisation représenté sur les figures, la vis sans fin est disposée parallèlement à l'élément longitudinal de piètements 13 arrière. Le palier support de rotation 10 de la vis sans fin 6 est associé à la crosse transversale d'extrémité 16 du siège d'extrémité 2c à proximité de l'association de ladite crosse 16 avec l'élément de support longitudinal 15 arrière constituant ledit siège 2c.

De la même manière, les écrous 8 sont disposés sur les crosses transversales d'extrémité d'assise 16 des sièges entraînés à proximité de l'association desdites crosses 16 avec les éléments de support longitudinaux 15 associés. Les filetages 9a,9b représentés sur les figures sont tels que le siège d'extrémité 2a et le siège central 2b progresseront dans le même sens. Cependant, du fait des différents pas, le siège 2b aura un mouvement d'amplitude plus grand que le siège 2a pour un nombre équivalent de tours donnés à la vis sans fin 6.

## Revendications

1. Système d'entraînement de sièges d'appareils de transport en commun convertibles et à encombrement variable (2a, 2b, 2c) suivant un axe d'encombrement (3) longitudinal, les sièges (2a,2b,2c) étant montés sur une structure (4) à plusieurs sièges adjacents (2a,2b,2c), chacun écarté du suivant par un espace inter-bâti (5), coulissant sur la structure (4) suivant l'axe d'encombrement (3), le système d'entraînement permettant le passage d'au moins un siège (2a,2b,2c) d'une première position extrême dite à encombrement maximal où l'espace inter-bâti (5) est maximal, à une deuxième position extrême dite à encombrement minimal où l'espace inter-bâti (5) est minimal, caractérisé en ce qu'il comprend une vis sans fin (6) d'axe (7) parallèle à l'axe d'encombrement (3) venant en coopération avec au moins un écrou (8) solidaire du siège (2a,2b,2c) à entraîner, de sorte qu'une action en rotation dans un sens sur la vis sans fin (6) entraîne le siège (2a,2b,2c) de l'une des deux positions extrêmes vers l'autre, tandis qu'une action en rotation dans l'autre sens sur la vis sans fin (6) entraîne le siège (2a,2b,2c) dans le mouvement inverse ; la vis sans fin (6) comportant au moins un filetage (9a, 9b) autobloquant ; et un palier de support de rotation (10) de la vis (6) étant associé à une crosse transversale d'extrémité (16) d'un siège d'extrémité (2c) ou de la structure (4), et l'écrou (8) est disposé sur la crosse transversale (16) d'un siège entraîné (2c), à proximité de l'association de ladite crosse avec un élément de support longitudinal (15) constituant ledit siège (2c).

2. Système d'entraînement selon la revendication 1, caractérisé en ce qu'une même vis sans fin (6) entraîne une pluralité de sièges (2a,2b,2c).

3. Système d'entraînement selon la revendication 2, caractérisé en ce que la vis sans fin (6) comprend un filetage (9) à pas unique pour l'ensemble des sièges entraînés (2a,2b,2c).

4. Système d'entraînement selon la revendication 2, caractérisé en ce que la vis sans fin (6) comprend une pluralité de filetages (9a,9b) à pas différents et/ou inverses, chacun associé à un ou plusieurs des sièges entraînés (2a,2b,2c).

5. Système d'entraînement selon l'une quelconque des revendications 1 à 4, caractérisé en ce que la vis sans fin (6) est activée manuellement.

6. Système d'entraînement selon l'une quelconque des revendications 1 à 4, caractérisé en ce que la vis sans fin (6) est activée par un moteur électrique ou équivalent.

7. Structure de sièges d'appareil de transport en commun, convertibles et à encombrement longitudinal variable, du type comportant une partie fixe (11) sur laquelle les sièges (2a, 2b, 2c) sont montés adjacents et coulissants suivant un axe d'encombrement (3) entre deux positions, ainsi que des moyens d'actionnement pour faire passer les sièges d'une position à l'autre, caractérisée en ce que les moyens d'actionnement comprennent un système d'entraînement selon l'une quelconque des revendications 1 à 6.

## Claims

1. A system for driving public transport vehicle seats that are convertible and of variable size (2a, 2b, 2c) along a longitudinal size axis (3), the seats (2a, 2b, 2c) being mounted on a structure (4) having a plurality of adjacent seats (2a, 2b, 2c), each separated from the next by an inter-frame space (5), the seats sliding on the structure (4) along the size axis (3), the drive system enabling at least one seat (2a, 2b, 2c) to pass from a "maximum-size" first extreme position where the inter-frame space (5) is at a maximum to a "minimum-size" second extreme position where the inter-frame space (5) is at a minimum, the system being characterized in that it comprises a worm screw (6) of axis (7) parallel to the size axis (3) and co-operating with at least one nut (8) secured to the seat (2a, 2b, 2c) to be driven, such that rotary action in one direction on the worm screw (6) drives the seat (2a, 2b, 2c) from one of its two extreme positions towards the other, while rotary action in the opposite direction on the worm screw (6) drives the seat (2a, 2b, 2c) in the opposite direction; the worm screw (6) including at least one self-locking thread (9a, 9b); and a rotary support bearing (10) for the screw (6) being associated with a transverse end bracket (16) of an end seat (2c) or of the structure (4), and the nut (8) is disposed on the transverse bracket (16) of a driven seat (2c), close to the association between said bracket and a longitudinal support element (15) forming said seat (2c).

2. A drive system according to claim 1, characterized in that a single worm screw (6) drives a plurality of seats (2a, 2b, 2c).

3. A drive system according to claim 2, characterized in that the worm screw (6) has a thread (9) having a single pitch for all of the driven seats (2a, 2b, 2c).

4. A drive system according to claim 2, characterized in that the worm screw (6) has a plurality of threads (9a, 9b) of different and/or opposite pitches, each associated with one or more driven seats (2a, 2b, 2c).

5. A drive system according to any one of claims 1 to 4, characterized in that the worm screw (6) is actuated manually.

6. A drive system according to any of claims 1 to 4, characterized in that the worm screw (6) is actuated by an electric motor or the equivalent.

7. A structure of public transport vehicle seats that are convertible and of variable longitudinal size, the structure being of the type comprising a fixed portion (11) on which the seats (2a, 2b, 2c) are mounted adjacent to one another and slidable along a size axis (3) between two positions, together with actuator means for causing the seats to pass from one position to the other, the structure being characterized in that the actuator means comprise a drive system according to any one of claims 1 to 6.

## Patentansprüche

1. System zum Antrieb von kenvertiblen Sitzen für öffentliche Verkehrsmittel (2a, 2b, 2c) mit verstellbarem Platzverbrauch gemäß einer Hauptabmessungsachse (3) in Längsrichtung, wobei die Sitze (2a, 2b, 2c) auf einer Struktur (4) mit mehreren nebeneinander angebrachten Sitzen (2a, 2b, 2c) montiert sind, wobei jeder Sitz vom Nebensitz durch einen Zwischenraum (5) zwischen den Traggestellen getrennt ist und auf seiner Struktur (4) gemäß der Hauptabmessungsachse (3) gleitet, wobei das Antriebssystem den Übergang mindestens eines Sitzes (2a, 2b, 2c) von einer ersten Endposition mit maximalem Platzverbrauch, bei der der Zwischenraum (5) zwischen den Traggestellen am größten ist, zu einer zweiten Endposition mit minimalem Platzverbrauch, bei der der Zwischenraum zwischen den Traggestellen (5) am geringsten ist, erlaubt, dadurch gekennzeichnet, daß es eine Schnecke (6) mit einer zur Hauptabmessungsachse (3) parallelen Achse (7) beinhaltet, die mindestens mit einer Mutter (8) zusammenwirkt, die mit dem anzutreibenden Sitz (2a, 2b, 2c) ortsfest verbunden ist, so daß eine Drehbewegung auf der Schnecke (6) in einer Richtung den Sitz (2a, 2b, 2c) von einer der beiden Endpositionen zur anderen antreibt, während eine Drehbewegung auf der Schnecke (6) in die umgekehrte Richtung den Sitz (2a, 2b, 2c) in die andere Richtung treibt; wobei die Schnecke (6) mindestens ein selbstsicherndes Gewinde (9a, 9b) beinhaltet; und wobei ein Drehstützlager (10) der Schnecke (6) einem Endquerkreuz (16) eines Endsitzes (2c) oder der Struktur (4) zugeordnet ist, und die Mutter (8) auf dem Querkreuz (16) eines angetriebenen Sitzes (2c) in der Nähe der den genannten Sitz (2c) bildenden Zuordnung des genannten Querkreuzes mit einem länglichen Stützelement (15) angebracht ist.

2. Antriebssystem nach Anspruch 1, dadurch gekennzeichnet, daß ein und dieselbe Schnecke (6) eine Vielzahl von Sitzen (2a, 2b, 2c) antreibt.

3. Antriebssystem nach Anspruch 2, dadurch gekennzeichnet, daß die Schnecke (6) für alle angetriebene Sitze (2a, 2b, 2c) ein Gewinde (9) mit einem einzigen Gewindegang beinhaltet.

4. Antriebssystem nach Anspruch 2, dadurch gekennzeichnet, daß die Schnecke (6) eine Vielzahl von Gewinden (9a, 9b) mit verschiedenen Schritten und / oder umgekehrten Schritten beinhaltet, wobei jeder einem oder mehreren angetriebenen Sitzen zugeordnet ist (2a, 2b, 2c).

5. Antriebssystem nach einem beliebigen der Ansprüche 1 bis 4, dadurch gekennzeichnet, daß die Schnecke (6) per Hand betrieben wird.

6. Antriebssystem nach einem beliebigen der Ansprüche 1 bis 4, dadurch gekennzeichnet, daß die Schnecke (6) durch einen Elektromotor oder eine ihm entsprechende Vorrichtung angetrieben wird.

7. Struktur mit konvertiblen Sitzen mit verstellbarem länglichem Platzverbrauch für öffentliche Verkehrsmittel, derart ausgebildet, daß es einen festen Teil (11) beinhaltet, auf dem die Sitze (2a, 2b, 2c) nebeneinander angebracht sind und gemäß einer Abmessungsachse (3) zwischen zwei Positionen gleiten, sowie Antriebsmittel um die Sitze von einer Position zur anderen zu bringen, dadurch gekennzeichnet, daß die Antriebsmittel ein Antriebssystem nach einem beliebigen der Ansprüche 1 bis 6 beinhalten.
